# FASCICULE DE BREVET EUROPEEN

(11) **EP 3 330 023 B1**
(45) Date de publication et mention de la délivrance du brevet: **28.07.2021**
(21) Numéro de dépôt: 16201424.5
(22) Date de dépôt: 30.11.2016
(51) Int. Cl.: B23B 13/02

(54) **CHÂSSIS SURMOULÉ POUR RAVITAILLEUR DE BARRES**
AUFGEFORMTES FAHRGESTELL FÜR STANGENLADER
OVERMOULDED FRAME FOR BAR FEEDER

(43) Date de publication de la demande: 06.06.2018
(73) Titulaire: LNS Management SA, 2534 Orvin (CH)
(72) Inventeur: SCHENK, Mark, 100 Taipei City, Taiwan R.O.C. (TW); REISSER, Frank, 2503 Bienne (CH)
(74) Mandataire: BOVARD AG

(56) Documents cités:
- EP-A1- 0 070 073
- DD-A1- 133 201
- DE-C1- 10 251 228
- JP-B2- 3 208 314
- JP-U- S4 941 377
- US-A- 3 800 636

## Description

### Domaine technique de l'invention

La présente invention se rapporte au domaine des ravitailleurs de barres. Plus précisément, elle concerne une méthode de fabrication d'un châssis, réalisé de préférence à l'aide de béton polymère, ainsi qu'un châssis obtenu par une telle méthode de fabrication pour des ravitailleurs de barres.

### État de la technique

On connaît l'usage de béton polymère pour des machines-outils en tant que matériau de remplissage de structures creuses, permettant notamment d'en augmenter la masse et d'en renforcer la rigidité, et ainsi mieux atténuer les vibrations lors de leur utilisation. Le document de brevet EP1683602 décrit un tel exemple de machine-outil dont l'armature du châssis est remplie partiellement de béton polymère. Aucun élément structurel ni encore moins fonctionnel ne sont toutefois réalisés à l'aide du béton polymère qui n'a simplement que pour vocation de lester et rigidifier des structures préexistantes.

Dans le cadre plus spécifique des ravitailleurs de barre, destinés par exemple à acheminer des barres à usiner par des décolleteuses positionnées juste en aval de la chaîne de production, les châssis sont en général formés d'une caisse en métal, dans lequel est monté un canal de guidage pour les barres ainsi que tous les éléments de commande pour déplacer ces dernières. Dans certains cas, une poutre centrale est destinée à constituer la colonne vertébrale d'assemblage. En effet, autour de cette poutre centrale est fixé un profilé en aluminium, dans lequel sont aménagés les différents segments du canal de guidage, auxquels on se réfère communément comme étant des paliers, ainsi que l'organe de transmission ou poussoir. Différents éléments d'ancrage sont par ailleurs disposés entre les différents segments pour permettre un réglage fin du guidage de bout en bout. En sortie du ravitailleur de barres est agencée une lunette, qui constitue le dernier élément de guidage au plus près de l'entrée de la broche du tour. Tous les composants électroniques de commande et de contrôle, relativement volumineux, ainsi que la transmission et le circuit hydraulique sont agencés dans l'espace disponible dans la caisse, et tout le câblage s'articule alors entre le profilé en aluminium et la poutre centrale.

Un inconvénient de ce système de montage est la dérive des cotes lors de l'assemblage de chaque segment les uns après les autres, qui est préjudiciable à la précision globale du guidage conféré pour les barres. D'autre part, l'assemblage du châssis s'avère particulièrement fastidieux puisque pour chaque machine, il est nécessaire de monter les segments du canal de guidage un à un, ce qui génère des temps de montage relativement élevés. Par ailleurs, en dehors des coûts de main-d'œuvre élevés, les coûts de production sont assez conséquents également, car l'usinage du profilé utilisé pour le guidage et la poutre en métal s'avèrent assez onéreux. Enfin, en raison du poids relativement faible de l'ossature de la machine, les bruits et les vibrations dues à la rotation de la barre demeurent élevés et relativement incommodants pour ceux qui sont amenés à travailler à proximité d'une telle machine pendant des durées prolongées.

Le document JP S49 41377 U concerne un ravitailleur de barres dépourvu de paliers de guidage et pourvu d'un canal de guidage de forme particulière ne confinant pas les barres à un seul degré de liberté. Il ne décrit aucune méthode de fabrication d'un châssis par moulage.

Le document US3800636 concerne une machine dont le châssis est réalisé en béton armé coulé dans un état précontraint afin de permettre de relâcher ces contraintes lors du fonctionnement de la machine. Il ne définit néanmoins aucun canal de guidage adapté pour le transport de barres.

Le document JP 3 208314 B2 montre les caractéristiques du préambule des revendications 1 et 6.

Il existe par conséquent un besoin pour une solution exempte de ces limitations connues.

### Résumé de l'invention

Un but de la présente invention est de proposer une solution de fabrication plus efficace d'un châssis pour un ravitailleur de barres ainsi qu'un

châssis obtenu par un tel procédé dont les coûts de fabrication et de main d'œuvre sont réduits.

Selon l'invention, ces buts sont atteints grâce à une méthode de fabrication d'un châssis pour ravitailleur de barres selon la revendication 1.

Ces buts sont également atteints selon l'invention grâce à un châssis obtenu par un tel procédé de fabrication, selon la revendication 6.

Un avantage de la solution proposée est de réaliser des économies d'échelles significatives, tant en termes de coûts de fabrication intrinsèques qu'en termes de main d'œuvre.

Un autre avantage de la solution proposée est de permettre de meilleures propriétés de guidage ainsi qu'une meilleure précision d'assemblage aux ravitailleurs de barres produits, et ce avec une qualité des plus homogènes. En effet, l'usage de moules et contre-moules réutilisables lors de la fabrication de chaque nouveau ravitailleur de barres permet de résoudre le problème de dérive des cotes en garantissant la reproductibilité à l'identique de chaque nouveau ravitailleur de barres, tout en améliorant leurs propriétés anti-vibration et anti-bruit, et le tout sans pour autant augmenter leur empreinte au sol.

Selon l'invention, la méthode de fabrication proposée pour un châssis de ravitailleur de barres comporte une opération de moulage et de surmoulage combinée permettant de réaliser de façon monobloc un élément central d'assemblage constituant ledit premier élément structurel et/ou fonctionnel, car celui-ci remplace simultanément la poutre et le profilé en aluminium usuels. Par ailleurs, selon un mode de réalisation préférentiel, le contre-moule ne constitue qu'une ossature à laquelle peuvent être greffés puis détachés d'autres types d'éléments fonctionnels et/ou structurels, auxquels l'on se réfère comme étant les « deuxièmes » éléments car ils sont formés par des pièces mécaniques rapportées, comme par exemple des éléments d'ancrage en tant qu'élément structurel d'ossature du châssis ou des bagues d'ouverture et de fermeture des paliers en tant qu'éléments fonctionnels. Dans ce cas, il est particulièrement aisé d'intégrer ces éléments structurels et/ou fonctionnels réalisés par exemple en métal autrement que par fixation et par bridage, ou encore par soudage, mais par une simple opération de surmoulage telle que revendiquée.

Selon un procédé de fabrication de l'invention, le premier élément structurel et/ou fonctionnel obtenu suite à l'opération de moulage et celle de surmoulage consiste en une âme centrale d'assemblage monobloc, et cette dernière forme non seulement une base structurelle pour le châssis, sous forme d'une ossature monobloc, mais également une pièce fonctionnelle constitutive de celui-ci que l'on peut qualifier de « bloc préfonctionnel ». En effet ce dernier contient déjà des formes résultant du moulage et/ou du surmoulage ne nécessitant par exemple plus que l'ajout de pièces d'usure pour être intégralement fonctionnels - comme par exemple un canal de guidage intégré, auquel doivent simplement être ajoutés des paliers de taille variable selon les besoins, ainsi qu'une gouttière pour loger la charnière d'ouverture et de fermeture des paliers - tandis que d'autres pièces mécaniques rapportées prises dans la masse suite à l'opération de surmoulage - comme par exemple les éléments d'ancrage et les bagues d'ouverture et de fermeture - sont déjà finalisées et opérationnelles immédiatement après cette opération de moulage et de surmoulage combinée. Une fois cette âme centrale d'assemblage monobloc réalisée, cette dernière peut ensuite être de préférence noyée dans une caisse de châssis du ravitailleur de barres lors d'une opération de moulage supplémentaire ultérieure, permettant ainsi d'augmenter encore plus la masse et la rigidité du châssis, mais sans plus être conditionnée par la réalisation d'élément structurel ni fonctionnel nécessitant une précision accrue, notamment pour assurer le guidage des barres de bout en bout et l'alignement intrinsèque de toutes les pièces constitutives du châssis. La dissociation des opérations de réalisation d'éléments fonctionnels et/ou structurels lors de l'opération de la formation de l'âme centrale d'assemblage monobloc de celle du remplissage ultérieur de la caisse par le matériau de moulage en vue de maximiser la masse et fixer par là-même à demeure cet élément fonctionnel et/ou structurel réalisé permettent donc de gagner en efficacité, car il est relativement complexe de réaliser ces deux opérations conjointement directement dans la caisse par une seule opération de moulage et de surmoulage.

Selon un mode de réalisation préférentiel, le matériau utilisé pour le ou les opérations de moulage est constitué de préférence par du béton ou de la résine polymère, dont les coûts sont relativement peu élevés et qui présentent parallèlement de bonnes propriétés de densité et permettent par conséquent d'améliorer significativement les propriétés anti-vibrations et anti-bruit conférées tout en réalisant les éléments structurels et/ou fonctionnels souhaités.

### Brève description des dessins

D'autres caractéristiques avantageuses ressortiront plus clairement de la description qui suit d'un mode particulier de réalisation de l'invention donné à titre d'exemple non limitatif et représenté par les dessins annexés, dans lesquels:
- les figures 1A et 1B sont des vues tridimensionelles schématiques d'un ravitailleur de barres selon l'art antérieur, avec ses différents éléments fonctionnels, et respectivement les paliers en position ouverte et en position fermée;
- la figure 2 est une vue schématique d'un contre-moule utilisé selon une variante préférentielle l'invention pour réaliser le châssis d'un ravitailleur de barres; (photo avec contre-moule);
- les figures 3A et 3B représentent respectivement une vue en trois dimensions et en coupe d'un moule utilisé selon un mode de réalisation préférentiel de l'invention pour réaliser le châssis d'un ravitailleur de barres;
- les figures 3C et 3D représentent respectivement une vue en trois dimensions et en coupe du moule représenté sur les figures 3A et 3B précédentes, lors d'une première opération de moulage d'une âme centrale d'assemblage monobloc pour un ravitailleur de barres;
- les figures 4A et 4B représentent respectivement une vue en trois dimensions et en coupe d'une caisse pour châssis de ravitailleur de barres utilisé selon un mode de réalisation préférentiel de l'invention;
- les figures 4C et 4D représentent respectivement une vue en trois dimensions et en coupe de la caisse pour châssis de ravitailleur de barres des figures 4A et 4B précédentes, ainsi que l'âme centrale d'assemblage monobloc
   obtenue suite à l'opération de moulage et de surmoulage selon l'invention, lors de l'opération de fixation provisoire de l'âme centrale d'assemblage monobloc à la caisse;
- les figures 4E et 4F représentent respectivement une vue en trois dimensions et en coupe de la caisse pour châssis de ravitailleur de barres illustrée sur les figures 4A et 4B précédentes, et l'âme centrale d'assemblage monobloc illustrée sur les figures 4C et 4D précédentes, lors de la réalisation du joint entre l'âme centrale d'assemblage monobloc et une surface d'appui d'un espaceur de la caisse du châssis;
- les figures 4G et 4H représentent respectivement une vue en trois dimensions et en coupe de la caisse pour châssis de ravitailleur de barres illustrée sur les figures 4A et 4B précédentes, ainsi que l'âme centrale d'assemblage monobloc illustrée sur les figures 4C et 4D précédentes, lors d'une deuxième opération de moulage de l'âme centrale d'assemblage monobloc dans la caisse;
- les figures 4I et 4J représentent respectivement une vue en trois dimensions et en coupe de la caisse pour châssis de ravitailleur de barres illustrées sur les figures 4A et 4B précédentes, lors d'une troisième opération de moulage.
- la figure 5 illustre une vue en trois dimensions d'un châssis surmoulé pour ravitailleur de barres selon un mode de réalisation préférentiel de l'invention, obtenu après toutes les opérations de moulage précédentes.

### Description détaillée

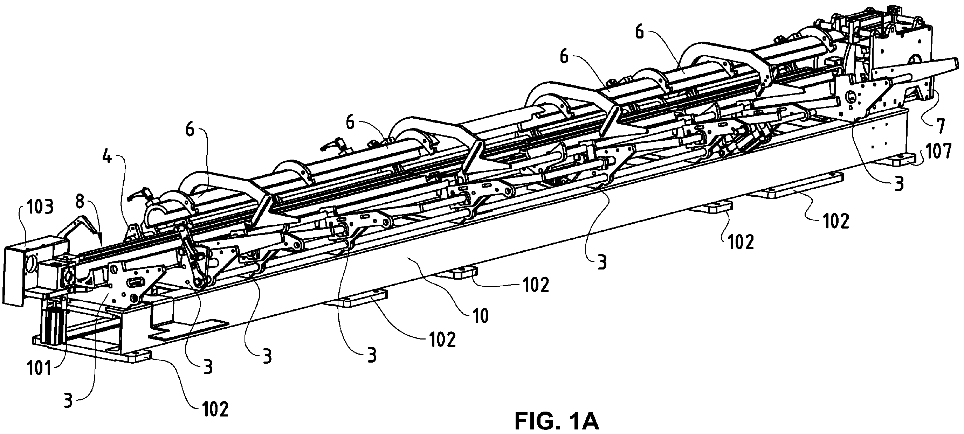

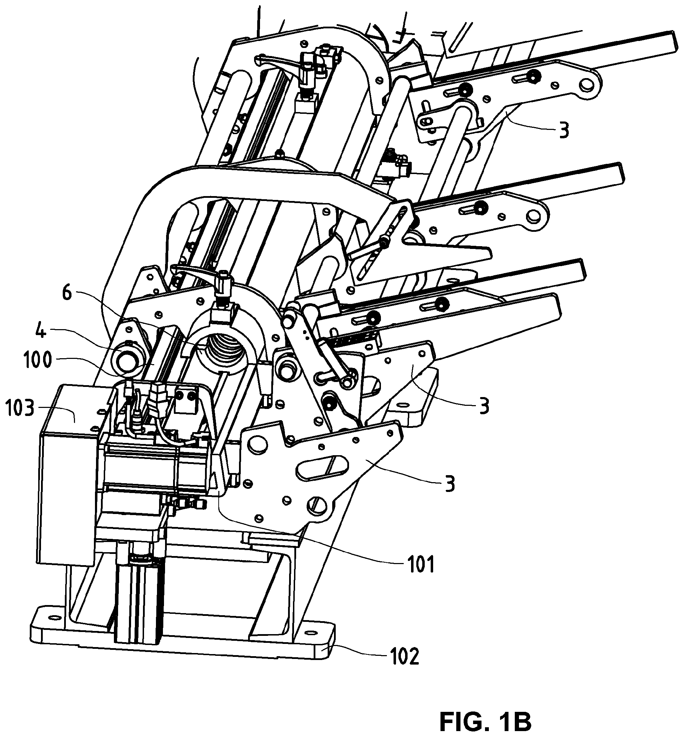

Les figures 1A et 1B illustrent deux vues schématiques en trois dimensions d'un ravitailleur de barres selon l'art antérieur, monté sur un châssis constitué d'une caisse 10 en métal, à la base duquel sont agencées des brides de fixation 102 prévues pour assembler les pieds posés au sol. Le ravitailleur de barres est représenté dans deux positions fonctionnelles différentes, à savoir une première position (Fig. 1A) dans laquelle les paliers 6 sont en position ouverte, puis une deuxième position (Fig. 1B) dans laquelle les paliers 6 sont fermés. La structure du châssis de ce ravitailleur de barres s'articule autour d'une poutre centrale d'assemblage en métal 100, visible sur la figure 1B, à laquelle on se réfère communément comme « beam », et à laquelle sont fixés différents éléments d'ancrage 3 et montés différents segments d'un profilé en aluminium 101 à l'intérieur duquel sont montés les éléments de guidage pour les barres formés par les paliers 6. Selon le mode de réalisation préférentiel illustré sur cette figure, ces paliers 6 sont en fait constitués de deux coques de forme identique, ici hémicylindrique, articulées autour d'une charnière, pour optimiser le guidage en confinant à un seul degré de liberté en translation. Sur chacune des deux figures 1A et 1B, on peut distinguer les bagues 4 d'ouverture et de fermeture relatives à cette charnière derrière le profilé en aluminium 101, ainsi que les éléments de transmission, notamment le poussoir 8, commandé par un module électronique 103 situé du côté entrée du ravitailleur de barres. A l'opposé, du côté sortie sur la figure 1A, se trouve la lunette 7, qui est le dernier élément de guidage pour les barres.

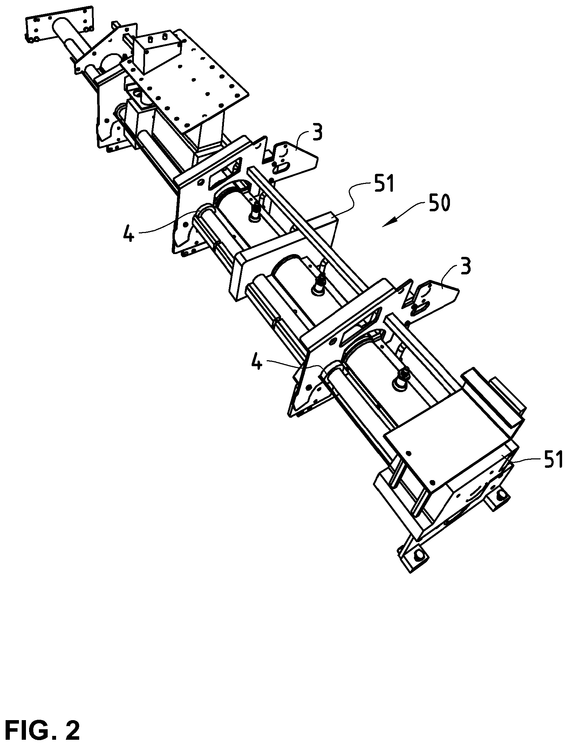

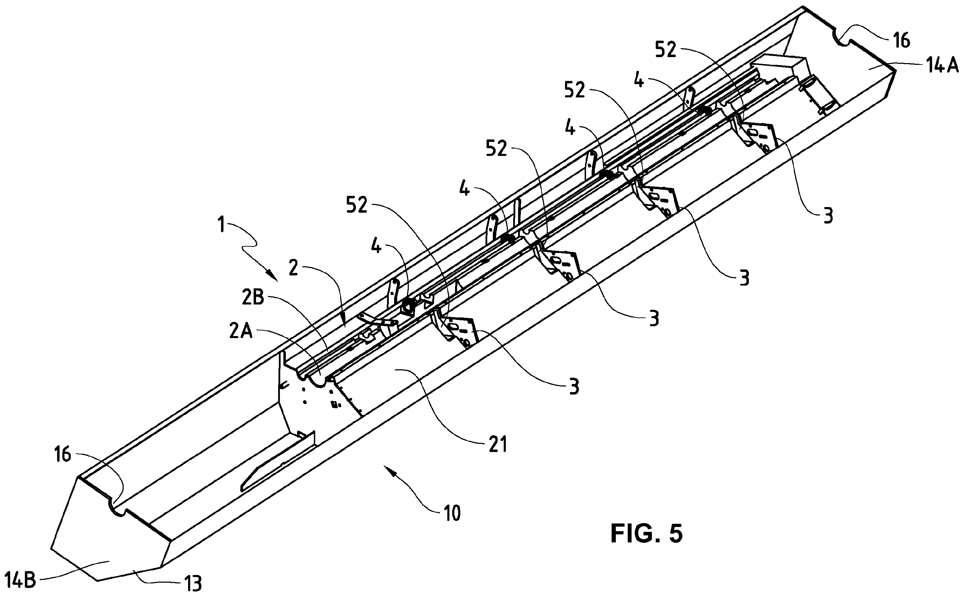

La présente invention vise à employer une approche d'assemblage inversée pour réaliser plus facilement les différents éléments fonctionnels et/ou structurels d'une telle machine-outil. En effet, au lieu d'employer une méthode de type « bottom-up », où une dérive des cotes est possible en raison du montage successif des différentes pièces d'assemblage les unes aux autres, on utilise ici une approche de type « top-down », visant à réaliser un châssis de façon reproductive et en réalisant des économies d'échelle et permettant de gagner en précision notamment pour des éléments fonctionnels à l'aide d'opérations de moulage et de surmoulage, où non seulement le moule, mais également le contre-moule sont réutilisables. Dans le cadre de la présente invention, on entend par élément structurel pour le châssis un élément dont on réalise la forme géométrique effective sans que celle-ci ne remplisse nécessairement de fonction particulière pour le ravitailleur de barres, tandis que par élément fonctionnel, on entend un élément dont la forme est intrinsèquement liée à une fonction pour le ravitailleur de barres d'un point de vue mécanique, comme par exemple une fonction de guidage pour les paliers 6. Certaines pièces peuvent toutefois être considérées comme étant à la fois structurelles et fonctionnelles, comme par exemple les pièces d'ancrage 3, car ces dernières confèrent à la fois une forme d'ossature ou de squelette au châssis 1, tout en réalisant parallèlement une fonction de support pour le ravitailleurs de barres. Les éléments fonctionnels ou structurels peuvent être moulés et leur forme être conditionnée, au moins partiellement, par la forme du moule 20 ou du contre-moule 50 (comme par exemple les glissières ou gouttières correspondant au canal central de guidage 2A destiné à recevoir les paliers 6, ou encore la charnière de fermeture 2B des demi-coques des paliers 6 réalisés par exemple par des formes concaves du moule 20): on qualifie de tels éléments de « premiers » éléments fonctionnels et/ou structurels. Lorsqu'ils consistent en des pièces mécaniques rapportées et surmoulées, comme les pièces d'ancrage 3 ou les bagues 4 d'ouverture et de fermeture des paliers, on qualifie ces éléments de « deuxièmes » éléments fonctionnels et/ou structurels. Tous ces éléments sont visibles sur les figures 2 et 5 suivantes correspondant à un mode de réalisation préférentiel de l'invention.

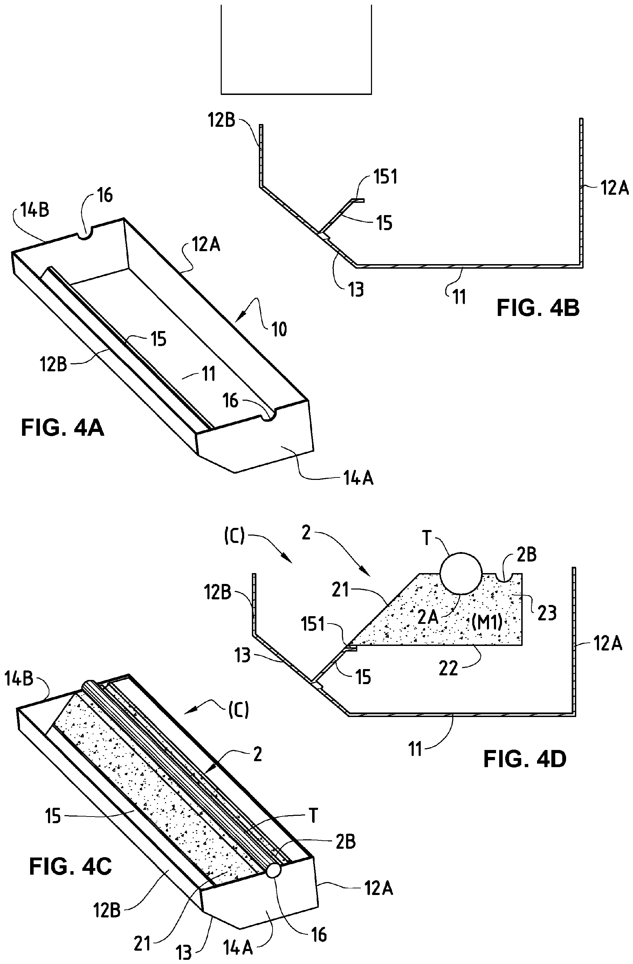

Selon ce mode de réalisation préférentiel pour la présente invention, on cherche à remplacer le « beam » ainsi que le profilé en aluminium, c'est-à-dire les deux éléments centraux d'un ravitailleur de barres traditionnel (référencés 100 et 101 des figures 1A et 1B précédentes), par une âme centrale d'assemblage monobloc 2 combinant ces deux éléments d'armature habituels que l'on positionne ensuite dans la caisse du châssis 1 à réaliser. Un telle âme centrale d'assemblage monobloc 2 est illustrée plus loin notamment sur les figures 4C et 4D. Comme on peut le constater sur la figure 2, le contre-moule 50 contient de préférence une ossature à laquelle sont fixés d'une part des éléments amovibles, c'est-à-dire les deuxièmes pièces d'éléments structurels et/ou fonctionnels consistant en des pièces mécaniques rapportées, et qui sont destinés à être retirés du contre-moule 50 après que celui-ci aura été surmoulé. C'est le cas ici notamment des pièces d'ancrage 3 ainsi que des bagues 4 d'ouverture et de fermeture des paliers 6, que l'on retrouve sur la figure 5 une fois le châssis 1 terminé. Autrement dit, ces éléments fonctionnels (c'est-à-dire les pièces d'ancrage 3 et les bagues 4) restent noyés dans la masse du matériau de moulage pour former une structure résultante massive extrêmement rigide, dont les performances anti-vibrations sont ainsi améliorées par rapport aux ravitailleurs de barres usuels. Par ailleurs, notamment afin de loger la boîte de transmission 103 à l'intérieur du châssis 1 (NB: qui, pour un autre type de machine outil, pourrait être constitué par n'importe quel autre module mécanique et/ou électronique de commande), ainsi que pour la passage de divers éléments de câblage, notamment le long des paliers 6 de guidage, sont prévus des éléments de contre-moulage 51 amovibles, par exemple en POM ou tout type de plastique de type polyester ou polyuréthane, destinés à former des espaces creux (NB: c'est la raison pour laquelle on se réfère à ce type d'éléments comme étant des « void formers » en anglais), et qui sont également retirés après qu'il ont été surmoulés. La forme géométrique de ces éléments de contre-moulage 51 amovibles peut ainsi correspondre à ceux que l'on souhaite intégrer dans le châssis et un compromis peut ainsi être réalisé entre l'optimisation de l'espace requis pour divers éléments à intégrer ainsi que la maximisation de la masse et la ridigité de ce dernier, en vue d'atténuer au mieux le bruit et les vibrations à l'usage.

Bien que non représentés explicitement sur la figure 2, on comprendra toutefois que d'autres types d'éléments fonctionnels pertinents pour un ravitailleur de barres pourraient également être réalisés à l'aide du moule 20 et/ou du contre-moule 50 ainsi que des éléments de contre-moulage amovibles 51 dans le cadre de la présente invention, comme par exemple des empreintes de guidage pour les éléments de serrage matière - typiquement les couteaux usuels - ou encore des empreintes correspondant à la lunette, à des conduites de récupération hydraulique, à des composants de la transmission mécanique du système poussoir, au système d'extraction de la chute du dernier bout de barre non usinable, chemin de câbles électrique et pneumatique, circuit et réservoir hydraulique, etc. Par ailleurs, on comprendra que les notions de moule et de contre-moule sont utilisées, dans le cadre de la présente invention, par pure convention pour associer respectivement chacun de ces moules - un contre-moule ne constituant en réalité qu'un autre type de moule - à une étape de moulage A et une étape de surmoulage B correspondante. Toutefois, bien qu'un moule soit supposé réaliser essentiellement des formes respectivement pleines ou convexes à l'inverse d'un contre-moule ayant quant à lui plutôt pour vocation de former des formes creuses ou concaves, le matériau de moulage étant amené à l'entourer, on pourra toutefois noter que les cavités relatives au canal central de guidage intégré 2A et à la gouttière 2B pour la charnière de fermeture du palier sont, selon le mode de réalisation préférentiel illustré par la figure 2, réalisées directement par le moule 20, même si ces cavités auraient pu également être réalisées par apposition d'un contre-moule 50 au-dessus du moule 20 retenant le matériau de moulage, et qui présenterait les formes géométriques souhaitées pour former de telles creusures.

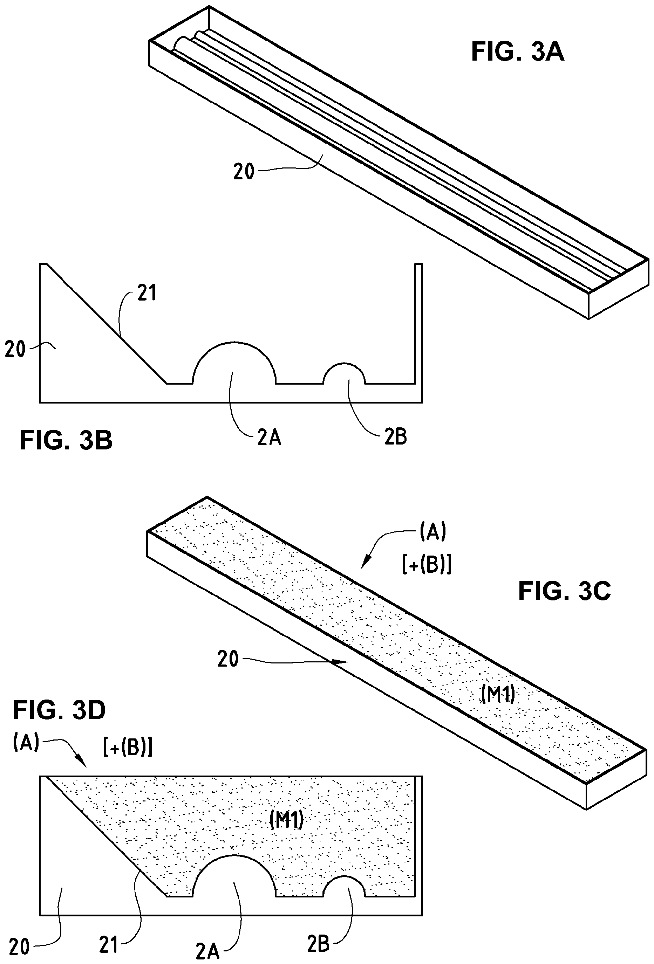

Selon le mode de réalisation préférentiel décrit à l'aide des figures 3A,3B,3C et 3D ainsi que 4A,4B,4C,4D,4E,4F,4G,4H, et 4I qui suivent, on effectue plusieurs opérations successives pour réaliser le châssis surmoulé dans le cadre de la présente invention. La fabrication de ce châssis commence ainsi par la réalisation d'une âme centrale d'assemblage monobloc 2 suite aux opérations de moulage illustrées par les figures 3A,3B,3C et 3D, qui effectue en réalité simultanément l'opération de surmoulage à l'aide du contre-moule 50, bien que ce dernier ne soit pas représenté sur ces figures. La figure 3A représente ainsi un moule 20, dont on peut distinguer sur la figure 3B en coupe suivante différentes caractéristiques géométriques visant à conférer à l'objet moulé résultant au moins certaines propriétés fonctionnelles. Ainsi, on peut voir dans le fond de ce moule 20 une paroi latérale inclinée, visant à conférer à l'objet moulé une paroi inclinée rectiligne, ainsi que deux bombages hémicylindriques, juxtaposés l'un à côté de l'autre dans la paroi du fond du moule, et visant à réaliser deux gouttières hémicylindriques de forme correspondante, formant un canal de guidage intégré 2A ainsi qu'une gouttière 2B pour loger la charnière de fermeture du palier 6 décrit précédemment.

Lors de l'étape de moulage A, réalisée à l'aide d'un premier matériau de moulage M1 consistant de préférence en du béton ou de la résine polymère, on remplit le moule 20 jusqu'à ras bord, et attend l'obtention d'une surface plane et horizontale, comme illustré sur les figures 3C et 3D. Bien que non illustré sur cette figure, lors de cette opération de moulage, on adjoint de préférence simultanément le contre-moule 50, de telle sorte que l'opération de moulage A et l'opération de surmoulage B, destinées chacune à réaliser des éléments structurels et potentiellement fonctionnels du châssis 1 à fabriquer, sont effectuées conjointement afin de réduire au maximum le temps de fabrication. Toutefois, bien qu'il soit envisageable de réaliser directement ces deux opérations respectivement de moulage A et de surmoulage B directement dans la caisse d'un châssis 1 sans utiliser de moule intermédiaire dédié, on pourra privilégier d'employer un tel moule 20 lors d'une opération de fabrication intermédiaire afin de dissocier la fonction de réalisation d'au moins certains éléments fonctionnels, qui nécessite un positionnement très précis des éléments de moulage et de contre-moulage pour garantir l'alignement de tous les éléments de guidage, ainsi qu'un positionnement relatif précis des différents éléments constitutifs du châssis 1 à réaliser, de celle du remplissage intrinsèque de la caisse, visant uniquement à augmenter la masse et la rigidité du châssis et qui nécessite par conséquent une précision moindre du positionnement des éléments de moulage, et peut donc être réalisée lors d'une étape ultérieure séparée.

A la suite de la première opération de moulage A et de surmoulage B de préférence simultanées à l'aide du moule 20 des figures 3A,3B,3C et 3D, on obtient une âme centrale d'assemblage monobloc 2 que l'on peut qualifier de « pré-fonctionnelle » car cette dernière contient déjà des éléments résultant du moulage ne nécessitant plus que l'ajout de pièces d'usure pour être fonctionnels - comme par exemple un canal de guidage intégré 2A ainsi que la gouttière 2B pour loger la charnière d'ouverture et de fermeture des paliers 6 - tandis que d'autres éléments résultant de l'opération de surmoulage - comme par exemple les éléments d'ancrage 3 et les bagues 4 d'ouverture et de fermeture, visibles sur la figure 5, qui sont pour leur part déjà finalisés et opérationnels après cette opération de moulage et de surmoulage combinée. Cette âme centrale d'assemblage monobloc 2 préfonctionnelle remplace avantageusement les deux éléments d'ossature habituels d'un ravitailleur de barre non seulement parce qu'elle permet de fusionner deux pièces structurelles d'assemblage en une seule, mais également parce que cette pièce obtenue est d'une part beaucoup plus rigide que les pièces en métal employées jusqu'à présent, et d'autre part, celle-ci peut être réalisée très facilement à moindre coût grâce à cette technique, et de plus de façon reproductible sans nécessiter d'ajustements fins systématiques lors des opérations de montage, de telle sorte que des économies d'échelle sont réalisées en termes de coût de main d'oeuvre pour la fabrication. Enfin, cette pièce d'armature, qui forme désormais la base structurelle et l'ossature fonctionnelle du châssis, permet d'obtenir une base modulaire pour différentes tailles de paliers 6 interchangeables, qui peuvent être remplacés selon les besoins à l'intérieur du canal central de guidage intégré 2A, ce qui n'était pas possible jusqu'à présent dans le profilé en aluminium dont la forme géométrique ne correspondait pas à celle des paliers 6 et ne permettait par conséquent que d'en loger des segments d'une taille donnée.

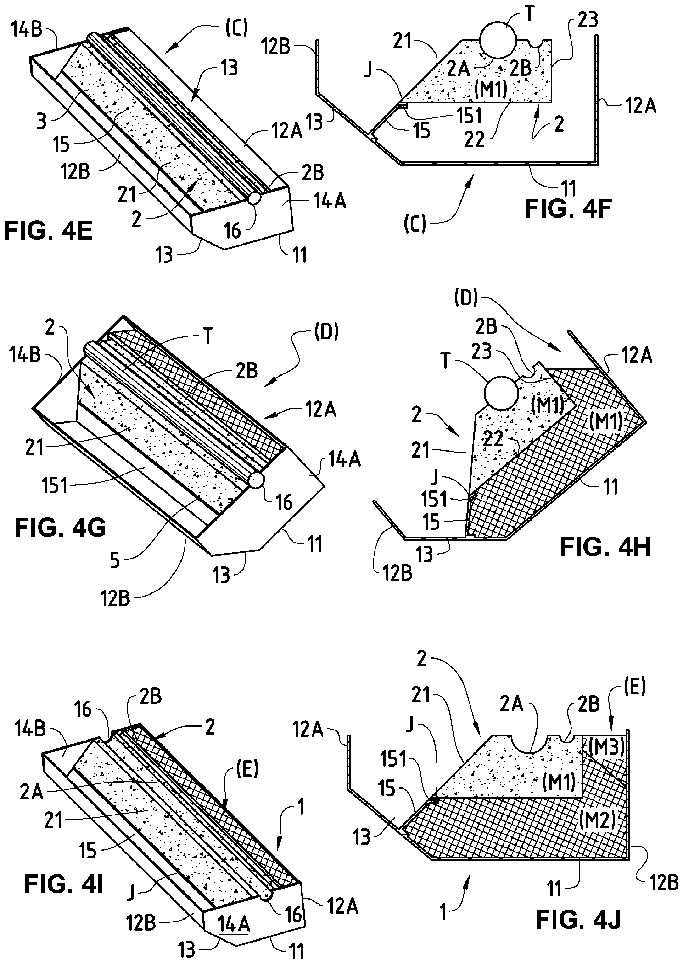

Les figures 4A,4B,4C,4D,4E,4F,4G,4H, et 4I qui suivent se rapportent au mode de réalisation préférentiel utilisant plusieurs étapes de moulage successives, ici une première étape de moulage A pour réaliser l'âme centrale monobloc 2, puis une deuxième étape de moulage D réalisée dans la caisse 10 en métal du châssis 1 lui-même, afin de remplir les interstices laissés entre cette âme centrale d'assemblage monobloc 2 et la paroi interne de la caisse 10. Ce mode de réalisation implique par conséquent des étapes de moulage dissociées, la deuxième étape de moulage pouvant parallèlement être également considérée comme une étape de surmoulage, l'âme centrale d'assemblage monobloc 2 jouant en effet également un rôle de contre-moule lors de cette étape. Bien que dans la description qui suive, le châssis formé conserve la caisse 10 comme élément d'armature, on pourrait toutefois également imaginer, dans un souci de réduction additionnelle des coûts, de n'utiliser une caisse 10 que comme moule pour donner la forme structurelle finale au châssis 1, ici articulé autour de son ossature formée par l'âme centrale d'assemblage monobloc 2, mais de la réutiliser ensuite pour reproduire d'autres châssis additionnels, de la même manière que l'on peut réutiliser le moule 20 illustré par les figures 3A,3B,3C et 3D précédentes.

Selon ce mode de réalisation préférentiel, la caisse 10 du châssis, réalisée de préférence en métal ou en acier, comprend un bord incliné 13, destiné à pouvoir positionner la caisse en appui lors de la deuxième opération de moulage D, ainsi qu'un espaceur 15 pourvu d'une surface d'appui 151 pour apposer l'âme centrale d'assemblage monobloc 2 à l'intérieur de la caisse 10 tout en laissant un espace libre par rapport au fond 11. Les parois latérales (première paroi latérale longitudinale et deuxièmes parois longitudinales 12A et 12B) sont de préférence verticales, tandis que dans les parois frontale 14A et respectivement arrière 14B de la caisse 10 sont pratiquées des échancrures 16 de forme hémicirculaire, dont la taille correspond à celle du canal central de guidage 2A de l'âme centrale d'assemblage monobloc formée lors des étapes de fabrication précédentes. Selon une variante non illustrée, d'autres formes géométriques (par exemple elliptique, parabolique, triangulaire...) seraient également envisageables, pour autant qu'elles confinent de bonnes propriétés de guidage. Toutes les références relatives à la caisse 10 illustrée sur les figures 4A et 4B étant reprises sur les figures 4C,4D,4E,4F,4G,4H,4I et 4J qui suivent, ces références ne seront pas répétées intégralement pour la description de chacune de ces figures dans un souci de concision; cette remarque vaut également pour l'âme centrale d'assemblage monobloc 2 selon le mode de réalisation préférentiel décrit, et dont l'intégralité des références est d'abord évoquée sur les figures 4C et 4D, puis ensuite reprise dans toutes les figures 4E,4F,4G,4H,4I et 4J suivantes.

Les figures 4C et 4D illustrent l'étape de fixation provisoire de l'âme centrale d'assemblage monobloc 2 dans la caisse 10 du châssis 1 que l'on cherche à fabriquer, en vue de réaliser la deuxième étape de moulage D destinée à augmenter encore la masse et la rigidité du châssis 1 en même temps que l'âme centrale d'assemblage monobloc 2 est fixée à demeure dans la caisse 10.

Lors de cette étape, l'âme centrale d'assemblage monobloc 2, qui comprend une surface inclinée 21, ainsi qu'une surface inférieure 22 sensiblement plane et une surface latérale 24 sensiblement verticale, est positionnée d'une part sur une surface d'appui 151 sensiblement horizontale à l'extrémité de l'espaceur 15 dans ladite caisse 10, tandis qu'elle est d'autre part maintenue par un tube T de section cylindrique dont la taille correspond à celui du canal de guidage intégré 2A réalisé dans ladite âme centrale d'assemblage monobloc 2 ayant été obtenue suite à la première étape de moulage A coinjointe à celle de l'étape de surmoulage B précédemment effectuée. Le tube de fixation T est apposé sur la caisse 10 en étant introduit dans les échancrures 16 de chacune des faces avant 14A et arrière 14B, puis il est fixé à ces parois à l'aide de moyens d'attache non représentés afin d'être maintenu en place lors de l'opération de jointure et de moulage qui vont suivre. On pourra remarquer que, selon ce mode de réalisation préférentiel, l'âme centrale d'assemblage monobloc 2 est biseautée et que l'inclinaison d'environ 45 degrés correspond également à celle de l'espaceur 15, de telle sorte que ce dernier se trouve dans le prolongement de la surface inclinée 21 de l'âme centrale d'assemblage monobloc 2 en position de fixation provisoire. Un tel agencement permet d'une part de fournir un moyen efficace pour vérifier l'exactitude de l'opération intermédiaire d'assemblage avant d'effectuer la deuxième opération de moulage D, et d'autre part de garantir qu'un espace substantiel de travail soit libéré au-dessus du châssis 1, ainsi que pour loger les pièces d'ancrage 3, relativement volumineuses en hauteur, sans que ces dernières ne fassent indûment saillie hors de la caisse 10.

Une fois l'âme centrale d'assemblage monobloc 2 positionnée suite à l'étape de fixation provisoire C décrite ci-dessus sur la base des figures 4C et 4D, on réalise ensuite de préférence un joint J étanche au niveau de la surface d'appui 151, comme illustré sur les figures 4E et 4F, et ce avant de réaliser la deuxième étape de moulage D. L'espaceur 15 s'étalant sur toute la longueur de la caisse 10, il permettra ainsi de confiner le matériau de moulage versé dans l'interstice entre l'âme centrale d'assemblage monobloc 2 et les parois internes de la caisse 10, la liaison n'ayant pas pour seule vocation que de réaliser une fixation par collage. De préférence, cette étape est réalisée en utilisant le même matériau de moulage M1 que celui utilisé pour la réalisation de l'âme centrale d'assemblage monobloc 2, à savoir du béton polymère, de telle sorte que l'adhérence soit maximisée vis-à-vis de cette dernière, sachant que les propriétés d'adhérence de ce matériau sont également bonnes vis-à-vis du métal.

Ensuite, une fois que le matériau de moulage utilisé pour réaliser le joint J étanche est retombé au niveau de la température ambiante on peut réaliser la deuxième étape de moulage D illustrée par les figures 4G et 4I suivantes. Lors de cette deuxième étape de moulage D, la caisse 10 est désormais positionnée en appui sur le bord incliné 13 de la caisse, et un deuxième matériau de moulage M2, qui peut être différent du premier matérieur de moulage M1 et présenter ainsi des propriétés de densité et de rigidité encore meilleures que le béton polymère, est introduit dans l'espace confiné entre le fond 11, une paroi latérale - ici la première paroi latérale 12A, une portion du bord incliné 13 de la caisse 10, et l'espaceur 15, d'une part, et le bord inférieur 22 et un bord latéral 23 de l'âme centrale d'assemblage monobloc 2 d'autre part afin de remplir l'interstice restant. De préférence, on utilisera le même matériau de moulage que lors de la première opération de moulage A, c'est-à-dire le premier matériau de moulage M1 constitué de préférence par du béton polymère, dont non seulement les propriétés de rigidité et de densité sont avantageuses, mais également le coût de revient.

Une fois cette deuxième étape de moulage D réalisée et que le matériau de moulage est retombé au niveau de la température ambiante, on pourra retirer tous les éléments de fixation provisoire et on effectuera, selon un mode de réalisation préférentiel pour la méthode de fabrication de l'invention, encore une troisième étape de moulage E pour effectuer la mise à niveau du matériau de moulage, comme illustré sur les figures 4I et 4J, où l'on peut constater que la caisse 10 étant alors repositionnée horizontalement. Ici encore, on pourra utiliser un troisième matériau de moulage M3, différent du premier matériau de moulage M1 et du deuxième matériau de moulage M2 pour des raisons d'équilibrage; toutefois, selon le mode de réalisation préférentiel choisi, on remplira de préférence la caisse jusqu'à obtenir une surface substantiellement plane toujours à l'aide du même matériau de moulage, c'est-à-dire du béton (ou résine) polymère. Le fait d'utiliser toujours le même matériau de moulage permet par ailleurs de maximiser encore plus les économies d'échelle. Par ailleurs, selon un mode de réalisation alternatif, on pourra utiliser au moins partiellement du sable et/ou des graviers, par exemple en tant qu'adjuvant au matériau de moulage, c'est-à-dire n'importe lequel de ceux choisis parmi le premier matériau de moulage M1, le deuxième matériau de moulage M2, et le troisième matériau de moulage M3, et ce afin d'optimiser les coûts sans porter préjudice à la fonction d'alourdissement et de rigidification recherchée du châssis 1.

On pourra noter que des éléments de contre-moule 51 destinés à former des espaces creux additionnels évoqués précédemment en lien avec la figure 2 comme étant adjoints au contre-moule 4 lors de ladite étape de surmoulage B peuvent également être placés dans la caisse 10, à titre subsidaire ou alternatif, lors de la deuxième étape de moulage D réalisée dans ladite caisse 10, voire même lors de la troisième étape de moulage E si besoin, afin de libérer suffisamment d'espace pour différents éléments de contrôle ou de câblage habituellement logés dans la caisse 10.

A l'issue de ces différentes étapes de moulage (A,D,E) et de l'étape de surmoulage B susmentionnée, on obtient ainsi un châssis 1 comme celui illustré sur la figure 5 dont les propriétés structurelles en termes de ridigité et de masse sont améliorées, mais dont les coûts de fabrication sont parallèlement réduits. Sur cette figure, on peut bien distinguer, à l'intérieur de la caisse 10 en métal, l'âme centrale d'assemblage monobloc 2 fixée à demeure dans la caisse par surmoulage - les opérations de moulage additionnelles, comprenant au moins la deuxième opération de moulage D à l'intérieur de la caisse 10, pouvant également être considérée comme telle, avec la poutre jouant en effet également un rôle de contre-moule à ce moment-là - ainsi que la paroi inclinée 21 de cette dernière et le canal central de guidage 2A et la gouttière 2B pour la charnière de fermeture du palier. En plus de ces formes géométriques moulées, on peut distinguer les éléments métalliques surmoulés que sont les bagues 4 pour l'ouverture et la fermeture des paliers, ainsi que les différents éléments d'ancrage 3 positionnés au niveau de chaque segment d'acheminement du ravitailleur de barres, ainsi que les empreintes du contre-moule matérialisées par les fentes 52, dont le positionnement et les dimensions seront exactement identiques pour chacun des châssis 1 réalisés selon le mode de fabrication décrit. Le châssis 1 étant représenté sur cette figure dans une direction opposée à celle des figures 4A-J, on notera toutefois que les faces avant et arrière 14A et 14B sont inversées par rapport à ces dernières figures; néanmoins, on y distingue toujours les échancrures 16 de fixation de forme correspondante à celle du canal central de guidage 2A. On comprendra du reste que la forme de la caisse 10, et en particulier la forme géométrique des faces avant et arrière, respectivement 14A et 14B, de la caisse 10 qui conditionnent la forme structurelle de l'enveloppe du châssis 1, pourront être adaptées selon les besoins, et notamment en vue de permettre sa fabrication en une seule opération de moulage/surmoulage combinée.

On a ainsi décrit comment obtenir un châssis surmoulé pour ravitailleur de barres à l'aide d'une méthode de fabrication disruptive qui permet à la fois d'augmenter les performances en termes de rigidité et de densité, d'intégrer facilement toutes les pièces maîtresses du ravitailleur telles que par exemple les paliers 6, la lunette 7, et la transmission 8, et de diminuer parallèlement les coûts de fabrication: les performances sont améliorées, alors que le mode industriel de manufacture est optimisé pour les châssis ainsi fabriqués.

On comprendra par ailleurs de la description détaillée qui précède que les caractéristiques avantageuses tirées des modes de réalisations préférentiels décrits pourront être pris isolément ou en combinaison.

### Liste des références

| | |
|---|---|
| **100** | Poutre centrale en métal |
| **101** | Profilé Aluminium |
| **102** | Brides de fixation pour les pieds |
| **103** | Boîte de transmission |
| **10** | Caisse/boîtier métal |
| **11** | Fond |
| **12A** | Première paroi latérale longitudinale |
| **12B** | Seconde paroi latérale longitudinale |
| **13** | Bord incliné |
| **14A** | Paroi frontale |
| **14B** | Paroi arrière |
| **15** | Espaceur/positionneur étanche incliné |
| **151** | Surface d'appui |
| **16** | Echancrures |
| **1** | Châssis |
| **2** | Âme centrale d'assemblaqe monobloc |
| **2A** | Canal central de guidage intégré |
| **2B** | Gouttière pour la charnière de fermeture du palier |
| **20** | Moule pour l'âme centrale d'assemblaqe monobloc |
| **21** | Surface latérale oblique |
| **22** | Bord inférieur |
| **23** | Bord latéral |
| **3** | Eléments d'ancrage (inter-segments) |
| **4** | Bague d'ouverture et de fermeture des palliers |
| **50** | Contre-moule |
| **51** | Eléments de contre-moulaqe amovibles (« void formers ») |
| **52** | Fentes/empreintes du contre-moule |
| **6** | Paliers |
| **7** | Lunette |
| **8** | Eléments de transmission |
| **M1** | 1^{er} Matériau de moulage |
| **M2** | 2^{e} Matériau de moulage |
| **M3** | 3^{e} Matériau de moulage |
| **T** | Tube de fixation |
| **J** | Joint réalisé avant l'étape de moulage |
| **A** | Première étape de moulage |
| **B** | Etape de surmoulage |
| **C** | Etape de fixation provisoire de l'âme centrale d'assemblage monobloc à la caisse |
| **D** | Deuxième étape de moulage |
| **E** | Troisième étape de moulage |

## Revendications

1. Méthode de fabrication d'un châssis (1) pour ravitailleur de barres dont les éléments de guidage pour les barres sont formés par des paliers (6), comprenant une première étape de moulage (A) effectuée à l'aide d'un premier matériau de moulage (M1) dans un moule (20) conjointement à une étape de surmoulage (B) d'un contre-moule (50), la forme dudit moule (20) et/ou les empreintes de forme dudit contre-moule (50) étant conçues pour réaliser de façon monobloc au moins un premier élément structurel et/ou fonctionnel dudit ravitailleur de barres, ledit premier élément structurel et/ou fonctionnel dudit ravitailleur de barres consistant en une âme centrale d'assemblage monobloc (2) comprenant une gouttière hémicylindrique formant un canal de guidage intégré (2A) adapté pour recevoir lesdits paliers (6), **caractérisée en ce que** des deuxièmes éléments structurels et/ou fonctionnels dudit ravitailleur de barres, formés par des pièces mécaniques rapportées, sont fixés de façon amovible audit contre-moule (50) avant ladite étape de surmoulage (B), puis sont détachés dudit contre-moule lorsque ce dernier est retiré du châssis (1) après ladite étape de surmoulage (B).

2. Méthode de fabrication d'un châssis (1) pour ravitailleur de barres selon la revendication 1, le châssis (1) étant par ailleurs structuré autour d'une caisse (10), **caractérisée en ce qu'**au moins une étape parmi ladite première étape de moulage (A) et une deuxième étape de moulage (D) ultérieure est réalisée à l'intérieur de ladite caisse (10).

3. Méthode de fabrication d'un châssis (1) pour ravitailleur de barres selon la revendication 2, **caractérisée en ce qu'**elle comprend une étape de fixation (C) provisoire de ladite âme centrale d'assemblage monobloc (2) à ladite caisse (10), suivie d'une deuxième étape de moulage (D) pour la fixation de ladite âme centrale d'assemblage monobloc (2) dans ladite caisse (10).

4. Méthode de fabrication d'un châssis (1) pour ravitailleur de barres selon l'une des revendications 2 ou 3, **caractérisée en ce que** des éléments de contre-moulage (51) destinés à former des espaces creux additionnels sont adjoints au contre-moule (5) lors de ladite étape de surmoulage (B) ou placés dans ladite caisse (10) lors de l'une desdites étapes de moulage (A,D) réalisées dans ladite caisse (10).

5. Méthode de fabrication d'un châssis (1) pour ravitailleur de barres selon l'une des revendications précédentes, **caractérisée en ce qu'**elle utilise du béton polymère en tant que matériau de moulage.

6. Châssis (1) pour ravitailleur de barres comprenant des paliers (6) en tant qu'éléments de guidage pour lesdites barres, ledit châssis étant réalisé selon la méthode de fabrication de l'une des revendications précédentes, comprenant au moins un premier élément structurel et/ou fonctionnel réalisé de façon monobloc dans un premier matériau de moulage (M1) consistant en une âme centrale d'assemblage monobloc (2) pourvue d'une gouttière hémicylindrique formant un canal de guidage intégré (2A) adapté pour recevoir lesdits paliers (6), **caractérisé en ce qu'**il comprend des deuxièmes éléments structurels et/ou fonctionnels, formés par des pièces mécaniques rapportées, qui sont surmoulées et noyées dans ledit premier matériau de moulage (M1).

7. Châssis (1) pour ravitailleur de barres selon la revendication 6 , **caractérisé en ce que** des éléments d'ancrage (3) sont par ailleurs intégrés à ladite âme centrale d'assemblage monobloc (2).

8. Châssis (1) pour ravitailleur de barres selon l'une des revendications 6 ou 7, **caractérisé en ce qu'**il est structuré autour d'une caisse (10), ladite caisse (10) comprenant un bord incliné (13), un espaceur (15) et des échancrures (16) pratiquées dans la paroi frontale (14A) et la paroi arrière (14B) de ladite caisse (10).

9. Châssis (1) pour ravitailleur de barres selon l'une des revendications 6 à 8, **caractérisé en ce que** ledit premier matériau de moulage (M1) est constitué de résine polymère.

## Patentansprüche

1. Verfahren zur Herstellung eines Rahmens (1) für eine Fördereinrichtung für Stangen, dessen Führungselemente für die Stangen von Lagern (6) gebildet sind, umfassend einen ersten Formungsschritt (A), welcher unter Verwendung eines ersten Formmaterials (M1) in einer Form (20) gemeinsam mit einem Schritt zum Umspritzen (B) einer Gegenform (50) durchgeführt wird, wobei die Gestalt der Form (20) und/oder die Formeindrücke der Gegenform (50) konzipiert sind, um einstückig zumindest ein erstes strukturelles und/oder funktionelles Element der Fördereinrichtung für Stangen zu erzeugen, wobei das erste strukturelle und/oder funktionelle Element der Fördereinrichtung für Stangen eine einstückige Zentralkernanordnung (2) umfasst, welche eine halbzylindrische Rinne aufweist, die einen integralen Führungskanal (2A) bildet, welcher eingerichtet ist, um die Lager (6) aufzunehmen, **dadurch gekennzeichnet, dass** zweite strukturelle und/oder funktionelle Elemente der Fördereinrichtung für Stangen, welche von hinzugefügten mechanischen Teilen gebildet sind, vor dem Schritt zum Umspritzen (B) an der Gegenform (50) lösbar befestigt werden, und dann von der Gegenform (50) entfernt werden, wenn die letztere von dem Rahmen (1) nach dem Schritt zum Umspritzen (B) abgezogen wird.

2. Verfahren zur Herstellung eines Rahmens (1) für eine Fördereinrichtung für Stangen nach Anspruch 1, wobei der Rahmen (1) ferner um ein Gehäuse (10) strukturiert ist, **dadurch gekennzeichnet, dass** zumindest ein Schritt des ersten Formungsschritts (A) und eines nachfolgenden zweiten Formungsschritts (D) innerhalb des Gehäuses (10) ausgeführt wird.

3. Verfahren zur Herstellung eines Rahmens (1) für eine Fördereinrichtung von Stangen nach Anspruch 2, **dadurch gekennzeichnet, dass** ein Schritt zum provisorischen Fixieren (C) der einstückigen Zentralkernanordnung (2) in dem Gehäuse (10) vorgesehen ist.

4. Verfahren zur Herstellung eines Rahmens (1) für eine Fördereinrichtung für Stangen nach einem der Ansprüche 2 oder 3, **dadurch gekennzeichnet, dass** Gegenformelemente (51), vorgesehen, um zusätzliche Hohlräume zu bilden, an die Gegenform (5) während des Schritts zum Umspritzen (B) angrenzen oder in dem Gehäuse (10) platziert sind, während eines der Formungsschritte (A, D) in dem Gehäuse (10) ausgeführt werden.

5. Verfahren zur Herstellung eines Rahmens (1) für eine Fördereinrichtung für Stangen nach einem der vorhergehenden Schritte, **dadurch gekennzeichnet, dass** Polymerbeton als Formmaterial verwendet wird.

6. Rahmen (1) für eine Fördereinrichtung von Stangen, umfassend Lager (6) als Führungselemente der Stangen, wobei der Rahmen nach einem der Herstellungsverfahren gemäss einem der vorhergehenden Ansprüche erzeugt wird, umfassend zumindest ein erstes strukturelles und/oder funktionelles Element, einstückig ausgeführt in einem ersten Formmaterial (M1) umfassend eine einstückige Zentralkernanordnung (2), ausgestattet mit einer halbzylindrischen Rinne, welche einen integralen Führungskanal (2A) bildet, eingerichtet, um die Lager (6) aufzunehmen, **dadurch gekennzeichnet, dass** zweite strukturelle und/oder funktionelle Elemente umfasst sind, gebildet von mechanischen Teilen, welche umspritzt und in das erste Formmaterial (M1) eingebettet sind.

7. Rahmen (1) für eine Fördereinrichtung von Stangen nach Anspruch 6, **dadurch gekennzeichnet, dass** ferner Ankerelemente (3) in der einstückigen Zentralkernanordnung (2) integriert sind.

8. Rahmen (1) für eine Fördereinrichtung von Stangen nach einem der Ansprüche 6 oder 7, **dadurch gekennzeichnet, dass** er um ein Gehäuse (10) strukturiert ist, wobei das Gehäuse (10) geneigte Kanten (13), ein Abstandsstück (15) und Nuten (16), gefertigt in der Vorderseite (14A) und der Rückseite (14B) des Gehäuses (10), aufweist.

9. Rahmen (1) für eine Fördereinrichtung für Stangen nach einem der Ansprüche 6 bis 8, **dadurch gekennzeichnet, dass** das erste Formmaterial (M1) ein Polymerkunststoff ist.

## Claims

1. Method of producing a frame (1) for a bar feeder whose guide elements for the bars are formed by bearings (6), comprising a first moulding step (A) carried out with the aid of a first moulding material (M1) in a mould (20) jointly with an overmoulding step (B) of a counter-mould (50), the shape of the said mould (20) and/or the shape impressions of the said counter-mould (50) being conceived to achieve in a monobloc way at least one first structural and/or functional element of the said bar feeder, the said first structural and/or functional element of the said bar feeder consisting of a monobloc assembly central core (2) comprising a semi-cylindrical trough forming an integrated guide channel (2A) adapted to receive the said bearings (6), **characterized in that** second structural and/or functional elements of the said bar feeder, formed by added mechanical pieces, are fixed in removable way to the said counter-mould (50) before the said overmoulding step (B), then are detached from the said counter-mould when the latter is withdrawn from the frame (1) after the said overmoulding step (B).

2. Method of producing a frame (1) for a bar feeder according to claim 1, the frame (1) being moreover structured around a box (10) **characterized in that** at least one step from among the said first moulding step (A) and a subsequent second moulding step (D) is achieved inside the said box (10).

3. Method of producing a frame (1) for a bar feeder according to claim 2, **characterized in that** it comprises a step of provisional fixation (C) of the said monobloc central core assembly (2) to the said box (10), followed by a second moulding step (D) for the fixation of the said monobloc central core assembly (2) in the said box (10).

4. Method of producing a frame (1) for a bar feeder according to one of the claims 2 or 3, **characterized in that** counter-mould elements (51) intended to form additional hollow spaces are adjoined to the counter-mould (5) during the said overmoulding step (B) or placed in the said box (10) during one of the said moulding steps (A, D) achieved in the said box (10).

5. Method of producing a frame (1) for a bar feeder according to one of the preceding claims, **characterized in that** it uses polymer concrete as moulding material.

6. Frame (1) for a bar feeder comprising bearings (6) as guide elements for the said bars, the said frame being achieved according to the production method of one of the preceding claims, comprising at least one first structural and/or functional element achieved in a monobloc way in a first moulding material (M1) consisting of a monobloc assembly central core (2) provided with a semi-cylindrical trough forming an integrated guide channel (2A) adapted to receive the said bearings (6), **characterized in that** it comprises second structural and/or functional elements, formed by added mechanical pieces, which are overmoulded and embedded in the said first moulding material (M1).

7. Frame (1) for a bar feeder according to claim 6, **characterized in that** anchoring elements (3) are moreover integrated with the said monobloc central core assembly (2).

8. Frame (1) for a bar feeder according to one of the claims 6 or 7, **characterized in that** it is structured around a box (10), the said box (10) comprising an inclined edge (13), a spacer (15) and notches (16) made in the front wall (14A) and the rear wall (14B) of the said box (10).

9. Frame (1) for a bar feeder according to one of the claims 6 to 8, **characterized in that** the said first moulding material (M1) is made of polymer resin.
